# EUROPEAN PATENT APPLICATION

(11) **EP 2 939 722 A1**
(43) Date of publication of application: **04.11.2015**
(21) Application number: 14166793.1
(22) Date of filing: 01.05.2014
(51) Int. Cl.: B01D 1/22, B01D 3/28, F28D 9/00

(54) **GAS DESORPTION**

(71) Applicant: Nederlandse Organisatie voor toegepast- natuurwetenschappelijk onderzoek TNO, 2595 DA 's-Gravenhage (NL)
(72) Inventor: van der Ham, Leonardus Volkert, 2628 VK Delft (NL); Goetheer, Earl Lawrence Vincent, 2628 VK Delft (NL)
(74) Representative: Jansen, Cornelis Marinus

(57) **Abstract**

Process for desorbing gas absorbed in an absorption liquid, the process comprising passing heated absorption liquid through a second channel of said desorption unit in counter-current flow with said absorption liquid in said first channel, while said absorption liquid in said first and second channel exchange heat through a corrugated plate separating at least a part of said first and second channel.

Gas desorption unit, comprising an assembly of plates, wherein the plates comprise a corrugated part comprising ridges and valleys, and a first channel there between, adapted for counter-current flow of said gaseous and liquid stream in said first channel, and a said second channel for a liquid stream in counter-current flow with the liquid stream in the first channel.

## Description

The invention relates to a process for desorbing gas absorbed in an absorption liquid, a gas desorption unit and a gas separation process.

In a typical absorption based gas separation process, one or more gasses are absorbed from a gas mixture into an absorption liquid, which is then regenerated in a stripper. The stripper is typically a column with random or structured packing. Liquid and vapour are in counter-current flow and in contact with each other in the column. The stripper is provided with a downstream reboiler to evaporate part of the lean absorption liquid, providing vapour and heated absorption liquid. The vapour is provided to the stripper, in counter-current flow with the absorption liquid, to provide the sensible and latent heat required to cause sufficient desorption of gas. The heated absorption liquid is heat exchanged with rich absorption liquid in a separate heat exchanger. A critical factor for the energy efficiency is the reboiler duty.

Leites et al. (Energy 2003, 28, 55-97) show in figure 30 a theoretical process flow diagram for purification of gas from CO₂ with MEA solution in an ammonia plant with an regenerator comprising an internal reboiler and a loop for liquid obtained from the reboiler to a heat exchanger in the regenerator. No practical implementation is given.

US-A-4 763 488 to Johnston describes a heat exchanging device for separating components of different volatility from a solution. The device comprises a stack of plates with etched channels therein between flat separator plates. The rectification channels are filled with an upflowing vapour stream of which a part is condensed and drained from the bottom of the channel due to gravitational flow. The rectification channel is in thermal contact with another channel filled with a liquid that flows counter-currently with respect to the vapour in the rectification channel and co-currently with respect to the condensed vapour in the rectification channel. No liquid feed is supplied to the rectification channel, which makes the unit unsuitable for desorption processes. A disadvantage is the risk that not at every location in the channel a liquid film is present, due the absence of a liquid feed, especially not at the top of the channel. The absence of a liquid film has a negative effect on the heat and mass transfer efficiencies of the channel. The etched channels that are used also have the disadvantage of limited liquid flow hold-up time and limited distribution of the liquid in a transversal direction, both having a negative effect on the heat and mass transfer performance.

US-A-5 592 832 to Herron describes a cryogenic process for production of oxygen from air, using a unit for separation and rectifying comprising a multiple passage plate-fin heat exchanger, wherein alternating passages are used for stripping and rectifying. The stripping and rectifying passages both contain counter-current two phase flows. A disadvantage is the limited transversal distribution of the vapour and of the liquid flows, as the flow between the plates is essentially in the lateral direction and no transversal mixing points are present as inherent part of the plate design.

US-A-2002/0 088 701 to Sorensen describes a heat integrated distillation column consisting of a plate heat exchanger comprising heating channels and distillation channels filled with a structured packing. In operation, a flowing heat source is transmitted upwardly through the heating channels and heat is transmitted through the channel walls to liquid falling through a distillation channels and vapour rising upwardly. The column can comprise a cooling portion comprising refrigeration cores arranged alternating side by side with the structured packing or fractionating structures of the distillation channels. Disadvantages of using flat plates with a packing in between are the separation of the heat transfer surface and the mass transfer surface, and the limited liquid flow hold-up time and limited transversal liquid distribution of the flat plates.

US-A-2011/0 083 833 to Zorzin describes a heat exchanger assembly comprising corrugated plates with a chevron pattern, defining refrigerant channels and water channels. Adjacent plates have opposite chevron directions. Hence, the ridges of adjacent plates are in touching contact at the points where the ridges of the adjacent plates are crossing.

In a corrugated plate-type heat exchanger, the corrugation directions of adjacent plates are normally either all the same or all opposite. Adjacent plates with opposite corrugation directions are in direct mechanical contact at the crossing points of the ridges and provide structural rigidity and good transversal liquid distribution properties. A disadvantage is that the volumes of the heat exchanger channels are equal and are determined by the corrugation characteristics that are used. Adjacent plates with the same corrugation directions have as disadvantage the absence of the crossing points, resulting in limited structural rigidity and limited transversal liquid distribution properties.

An objective of the present invention is to address the above-mentioned disadvantages at least in part. A further objective is to provide a more energy efficient gas desorption process.

It has surprisingly been found that this objective can be met at least in part by using a particular flow of gaseous and liquid phases in channels between corrugated plates. Accordingly, in a first aspect, the invention relates to a process for desorbing gas absorbed in an absorption liquid, the process comprising
(a) passing rich absorption liquid through a first channel of a gas desorption unit, thereby causing desorption of gas from the absorption liquid, to yield lean absorption liquid and desorbed gas, wherein said desorbed gas flows in counter-current flow with said absorption liquid in said first channel,
(b) evaporating part of said lean absorption liquid to yield vapour and heated absorption liquid,
(c) passing at least part of said vapour in said first channel in counter-current flow with said absorption liquid in said first channel, and
(d) passing heated absorption liquid through a second channel of said desorption unit in counter-current flow with said absorption liquid in said first channel, while said absorption liquid in said first and second channel exchange heat through a corrugated plate separating at least a part of said first and second channel.

Advantages of aspects of the invention include that the method is energy efficient and that the gas desorption unit can be compact. Further advantages that can be obtained in embodiments of the invention include a reduction of the reboiler duty and of the condenser duty. In addition, advantages of aspects of the invention include a smaller contactor area, reduced installation volume, smaller foot-print of the unit and/or smaller mass hold-up.

In addition, whereas prior art processes with lean-rich heat exchangers require elevated pressure of the rich stream in order to prevent desorption to occur prematurely in the heat exchanger, resulting in decreasing heat transfer performance due to the presence of gas, this is not an issue for the process of the invention.

The term "corrugated plate" as used herein refers to a plate comprising a corrugated part. Corrugated plates typically comprise parts that are not corrugated, for example at the sides.

In this application, a "lateral direction" indicates the direction set by the direction of flow of fluids in the channels, from an inlet to an outlet thereto, in a plane of a plate. The opposite direction in the plane defined by a plate is also in a lateral direction. The term "transversal" indicates the direction in the plane of a plate perpendicular to the lateral direction. The "normal direction" is perpendicular to the plane of plate and hence to the lateral and transversal direction.

The invention relates to a gas desorption process, for desorbing gas absorbed in an absorption liquid. The process can be used to desorb gas from an absorption liquid in which gas is absorbed. Such absorption liquid can be referred to as rich absorption liquid. The process yields lean absorption liquid, which is lean in said gas because at least part of the gas is desorbed from it.

In a first step, rich absorption liquid is provided into a first channel of a gas desorption unit. The desorption unit comprises a first and a second channel and is described in more detail hereinafter. Rich absorption liquid is passed through a first channel of a gas desorption unit. This results in desorption of at least some gas from the absorption liquid, yielding lean absorption liquid and desorbed gas. The desorbed gas typically flows in the first channel in counter current flow with the absorption liquid, because of the difference in volumetric mass density of the desorbed gas and the absorption liquid. Hence, the channel is typically arranged in the vertical direction, with respect to gravity. The process comprises evaporating at least part of the lean absorption liquid. For example, a part of one or more chemical components of the absorption liquid can be evaporated. Preferably 0.05-50 wt.% of the lean absorption liquid is converted in vapour, more preferably 2-20 wt.%.

The evaporation is typically carried out in a reboiler by heat exchange, preferably with a heating fluid. Hence, heat is typically provided to the absorption liquid. Optionally, the evaporation step comprises flashing. The evaporation yields vapour and heated absorption liquid, typically as separate streams. The heated absorption liquid has a temperature that is at least higher than the temperature of the absorption liquid as provided at the inlet of the gas desorption unit, preferably by at least 10 °C, more preferably at least 30 °C, even more preferably at least 50 °C higher.

At least part of the vapour is passed back to the first channel in counter-current flow with the absorption liquid, preferably at least 90 wt.% of the produced vapour, more preferably all. In this way, the vapour provided into the first channel preferably provides at least part of the sensible and/or latent heat required to promote desorption of gas. Typically, at least part of the vapour condenses in the absorption liquid in the first channel.

Typically, a gaseous stream comprising vapour of evaporated absorption liquid is provided into the first channel. The gaseous stream may comprise desorbed gas that is desorbed in the evaporation step.

At least part of the heated absorption liquid is passed through a second channel of the desorption unit in heat exchange with absorption liquid in a first channel, preferably at least 90 wt.% of the heated absorption liquid, more preferably all. Typically, the heated absorption liquid is passed in counter-current flow with respect to absorption liquid in a first channel.

The first channel and second channel are separated from each other, at least in part by a corrugated plate. At least some heat exchange between absorption liquid in said first and second channel is carried out through said corrugated plate separating at least a part of said first and second channel. The highly tortuous flow of the absorption liquid over such plates provides for efficient heat exchange. This allows for recovery of sensible heat from the heated absorption liquid. The heat exchange causes heating of the absorption liquid in the first channel, thereby contributing to desorption of at least some gas from the absorption liquid in the first channel. The heat exchange results in a decrease of the temperature of the heated absorption liquid in the second channel, yielding regenerated absorption liquid that can be obtained as product. In this way, heat exchange between rich and lean absorption liquid is integrated in the desorption unit, thereby increasing energy efficiency and allowing for a size reduction of the unit compared to separate units.

The process is preferably a continuous process. Each step can be carried out as a plurality of steps. The process can comprise a plurality of desorption steps, of evaporation steps and of heat exchange steps, for example in case of a gas desorption unit connected in series and/or comprising two or more assemblies.

Preferably, the process results in a reduction of the loading of absorbed gas by 30-100 %, more preferably 50-100 %, even more preferably 60-100 %, wherein the absorbed gas loading is in mol absorbed gas per kg absorption liquid or the effective absorbed gas loading in mol absorbed gas per mol active absorption liquid component, or such reductions of both.

The method comprises passing vapour in counter-current flow with absorption liquid in a first channel. The flow rate of the liquid in the first channel is typically more than 0.1 m³/m²/hr, as volume flow per available cross-sectional area of the channel, to ensure complete wetting of the walls of the channel, and usually lower than 500 m³/m²/hr, preferably 1 to 250 m³/m²/hr. The vapour flow typically has an F-factor of 0.1 Pa^{1/2} or more, to ensure proper transversal vapour distribution, and usually up to 5 Pa^{1/2}, to avoid liquid flooding, wherein the F-factor is the product of the superficial gas velocity and the square root of the vapour density.

Preferably, the process comprises condensation of at least some of the obtained gas. The condensation can for example comprise heat exchange against a cooling fluid in an external heat exchanger or in a heat exchanger that is integrated in the desorption unit. The desorbed gas, optionally condensed, can be collected and obtained as product. For example in case of CO₂ as absorbed gas, CO₂ can be obtained as product, and for example be stored as part of a carbon capture and storage process.

In an aspect, the invention relates to an absorption based gas separation process wherein for regeneration of the absorption liquid, a gas desorption process of the invention is used. Hence, an aspect of the invention relates to a gas separation process, comprising absorbing one or more gasses from a fluid stream into an absorption liquid, to yield rich absorption liquid and regenerating of at least part of said rich absorption liquid by a gas desorption process as described, using a gas desorption unit as described. Optionally, the gas separation process comprises a step of flashing rich absorption liquid upstream of the gas desorption process. In such step, typically the rich absorption liquid is first subjected to a pressure decrease step before being supplied to the desorption step. A gas stream that is formed during such pressure decrease can be combined with the gas stream that is produced in the desorption step. The regeneration of at least part of the rich absorption liquid yield lean absorption liquid that is preferably used again in the absorption step of the process. The fluid stream preferably is a gaseous stream comprising a mixture of gasses. In the process, one or more gasses are selectively removed from the fluid stream. Suitable gas separation processes include the treatment of natural gas, biogas and/or flue gas to remove acid gases, in particular H₂S and/or CO₂.

The gas desorption process can be used for desorption of one or more gasses. Preferably, the gas to be desorbed comprises acid gasses, such as CO₂ and/or H₂S. The process can be used for simultaneous desorption of two or more gasses from an absorption liquid.

The absorption liquid can be any liquid wherein the gas can be absorbed. The absorption can optionally be a mixture of liquids. The absorption liquid is preferably aqueous. The absorption of the gas can be based on chemisorption and/or physisorption. Accordingly, the absorption liquid preferably comprises chemical solvents and/or physical solvents. For chemical solvents, absorption primarily depends on a chemical reaction between the solvent and the gas. For physical solvents, absorption primarily depends on physical solubility of the gas. Examples of physical solvents include dimethylether of tetraethylene glycol, *N*-methyl-2-pyrrolidone, propylene carbonate, methanol, and mixtures thereof.

The absorption liquid preferably comprises one or more compounds to increase the absorption capacity for the one or more gases, preferably carbonate salts, phosphate salts, amino acid salts and amines, more preferably amines, more preferably in an amount of 1 wt.% or more, or 10 wt.% or more, even more preferably 20 wt.% or more, based on total weight of the absorption liquid. These compounds, in particular amines, are preferably used for acid gases. Preferred absorption liquids include monoethanolamine (MEA), diethanolamine (DEA), methyldiethanolamine (MDEA), diisopropanolamine (DIPA), and aminoethoxyethanol (diglycolamine) (DGA).

Rich absorption liquid is typically absorption liquid obtained from an absorption process. Such absorption liquid is typically relatively cold and depending on the specific application possibly at high pressure. For example, absorption liquid can be provided at 1-200 bar, or 1-100 bar, for example 2-20 bar, or if provided from a post-combustion CO₂ capture process, for example 1.5-3 bar. Typical temperatures for the absorption liquid as provided are -50 °C to 300 °C, such as 0-150 °C, or 10-80 °C. A typical loading of the gas is 0.3-0.9 mol gas per mol active absorption liquid component, for example per mol amine compounds.

In an aspect, the invention relates to a gas desorption unit. The gas desorption unit is preferably used in the gas desorption process of the invention. The gas desorption unit comprises an assembly of plates, said assembly comprising a first, second and third plate, each plate comprising a corrugated part comprising ridges and valleys, the corrugated parts of the first and second plate defining a part of a first channel between them, the corrugated parts of the second and third channel defining between them a part of a second channel adjacent to said part of said first channel,
wherein each of the first, second and third plate has opposed lateral ends, wherein the first channel comprises an inlet and an outlet for a gaseous stream at opposed lateral ends and an inlet and an outlet at opposed lateral ends for a liquid stream in counter-current flow with said gaseous stream,
and wherein said second channel comprises an inlet and an outlet at opposed lateral ends for a liquid stream in counter-current flow with the liquid stream in the first channel.

The corrugated plate part between the first and second channel allows for heat exchange between absorption liquid in said first and second channel. Preferably, said parts of said first and second channel are either or both formed between two corrugated plates. The use of a corrugated plate type heat exchange part integrated in the desorption unit allows for highly tortuous flows of the fluid streams in the channel, resulting in efficient desorption and heat exchange.

Without wishing to be bound by way of theory, it is believed that the particular flow of absorption liquid, vapour and desorbed gas in the first channel and heated absorption liquid in the second channel, in combination with the use of corrugated plate geometry for at least part of the channels, yields a more energy efficient gas desorption process. In particular, counter-current flow of a gaseous and a liquid phase in the first channel, and counter-current flow between a liquid phase in the second channel and a liquid phase in the first channel has been found to result in efficient heat exchange and flow properties that allow for efficient desorption in the first channel.

During use of such unit in a gas desorption process, direct gas-liquid contact between the counter-current gaseous stream and liquid stream in the first channel is ensured. Compared to a conventional stripping column with a separate heat exchanger between heated lean and cold rich absorption liquid, a separate heat exchanger can be avoided. Another advantage is that no elevated pressure is required to prevent premature desorption, as in the prior art. The gas desorption unit combines gas desorption and heat exchange, providing a simplified and compact design compared to a separate heat exchanger and stripping column. The gas desorption unit of the invention can be a plate-type desorption unit, which provides advantages such as easy maintenance, a modular design, less liquid misdistribution and reduced sensitivity to tilting, compared to a packed stripping column.

The plates are typically substantially parallel aligned, apart from corrugations of a plate. The parts of the channels between the plates are accordingly typically substantially parallel. The assembly preferably forms a stacking of plates. The distance between the plates may be different for various types of channels.

As used in this application, the first and second channel indicate a first type of channel and a second type of channel, the unit may comprise one or more of each type of channel. When used in the process of the invention, the first channel of the unit comprises absorption liquid, vapour and desorbed gas, and the second channel comprises heated absorption liquid.

Typically each plate allows for heat exchange between process streams in adjacent channels, by their thermal conductivity, typically the plates are metal plates. The assembly of plates can hence function as heat exchanger. The plates are typically impermeable to gas and liquids, apart from any ports in them.

Suitable types of assemblies of plates include those known for plate heat exchangers. The assembly is preferably permanently joined, including plates that are brazed, glued, bonded, soldered or welded together. Other suitable sealing types include gaskets between the plates, welded plates or semi-welded plates with gaskets between every second plate, as is known for plate heat exchangers. The assembly is typically provided with a seal around the edges, the seal is typically impermeably for liquids and gasses in the channels. Hence, the channels are typically defined between two adjacent plates and the seal between these two plates. The seal may act as a spacer to separate adjacent plates in normal direction.

The channels are provided with inlets and outlets for the various process streams, an inlet and an outlet for a particular stream are typically provided at opposed sides of the plate for transport of the process streams over a majority of the length of the plates.

The plates are provided with corrugations over at least part of the plates. The corrugations comprise, at either side of the plate, ridges and valleys. A corrugated plate typically comprises, at either side, alternating adjacent recesses and protrusions with inflection lines in each recess and protrusion. A ridge typically comprises a convex inflection line in a protrusion and a valley typically comprises a concave inflection line in a recess. Between two ridges, a groove is formed comprising a concave inflection line. Typically, a ridge as seen from one side of a plate is a valley as seen from the other side of the plate.

The plates typically have a generally constant thickness, such that a ridge at one side of the plate corresponds to a valley at the other side. The ridges and valleys extend as lines in the plane of the plates, typically at an angle to the transversal direction. The corrugated parts are typically enclosed by a seal at the transversal sides, such that any transport of a stream in a channel opposed lateral ends passes through the corrugated part and over the corrugations.

Typically, the outlet for gas and inlet for liquid are provided at a first lateral end and the inlet for gas and outlet for liquid are provided at a second lateral end. Typically, the inlet for liquid of the second channel is provided at said second lateral end and the outlet of said second channel is provided at said first lateral end. Preferably, said first lateral end is an upper end and said second lateral end is a lower end in case of a vertical arrangement of the plates. Preferably, the inlet and outlet at the same lateral end of a plate are formed as separate ports in a plate or in the sealing. Optionally, at a lateral end, an inlet and outlet are combined, for example by a port in a plate to a conduit for counter-current flow.

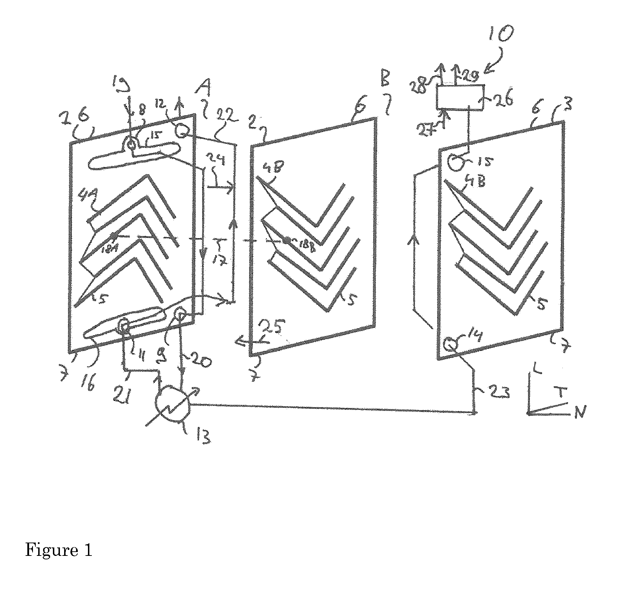

Figure 1 shows a schematic representation of an exemplary embodiment of a gas desorption unit and process of the invention.

Gas desorption unit 10 comprises first channel A and second channel B between a first plate 1, a second plate 2 and a third plate 3. The plates are generally parallel aligned. The direction L is the lateral direction, direction T the transversal direction and direction N the normal direction, the plates are positioned parallel to the lateral direction L and the transversal direction T and spaced apart in the normal direction N to form the channels A and B.

Each of the plates comprises a corrugated part 4 comprising ridges and valleys 5. Corrugated parts 4 are provided with a chevron pattern. First plate 1 has a chevron pattern 4A that is opposite of chevron pattern 4B of plate 2 and plate 3 has a chevron pattern 4B that has the same direction as that of plate 2. In the example embodiment of figure 1, first plate 1 has an upward pointing chevron pattern 4A, plates 2 and 3 have a downward pointing chevron pattern 4B. In the schematic drawing, the distance between plate 1 and 2 is depicted to be larger than is the case in reality, in fact the ridges 5 of plate 1 and ridges 5 of plate 2 in channel A are pressed against each other such that they are in mechanical contact at the points where the ridges are crossing. Dashed line 17 is a guide to the eye to indicate points 18A and 18B where the ridges 5 of first plate 1 and second plate 2 in the first channel A are crossing.

Each plate has an upper lateral end 6 and a lower lateral end 7. First channel A comprises an inlet 8 for liquid in the form of a port in first plate 1 at the upper end and an outlet 9 for liquid in the form of a port in first plate 1 at the lower lateral end. Inlet 8 is provided with the optional distributor 15 to distribute liquid over the width of the corrugated part 4. Distributor 15 can for example be integrated into the inlet 8 and/or structurally integrated with the plate 1. First channel A further comprises an inlet 11 for vapour in the form of a port in first plate 1 at the lower end and an outlet 12 for desorbed gas in the form of a port in first plate 1 at the upper end. Inlet 11 is provided with optional distributor 16 to distribute gas over the width of corrugated part 4.

Outlet 9 is connected to reboiler 13. Reboiler 13 is connected for vapour to inlet 11 and is provided with a connection for heated absorption liquid 23 to inlet 14 of the second channel B in the form of a port in third plate 3 at a lower end. Second channel B further comprises an outlet 15 for absorption liquid in the form of a port in third plate 3 at an upper end. All plates 1, 2, and 3 are heat conductive; however the simplified embodiment of figure 1 emphasizes heat transport through plate 2. Corrugated part 4 of plate 2 comprises inflection points 5, which are at one side of plate 2 ridges in the channel A and at the opposite side a valley in channel B.

In use, rich absorption liquid 19 is provided through inlet 8 into channel A, is subjected to desorption of at least part of the gas and lean absorption liquid 20 is provided from outlet 9 to reboiler 13. Vapour 21 is formed and passed back to channel A as part of gaseous stream 22 in counter-current flow in channel A with liquid phase 19. At the upper end of channel A, gaseous stream 22 comprises mostly desorbed gas and is obtained as product at outlet 12. Heated absorption liquid 23 is provided into channel B in counter current flow with liquid stream 19 in channel A and is passed to outlet 15. Heat exchange 25 occurs between the streams in channel A and channel B through plate 2.

The opposite chevron pattern of corrugated part 4A of plate 1 and corrugated part 4B of plate 2 causes for disturbed convective flow in channel A, provided for good desorption 24 and heat exchange 25.

The desorption process is combined with an optional gas absorption unit 26, allowing for the optional steps of absorbing CO₂ from flue gas 27 into the cooled regenerated absorption liquid from channel B to provide a gas stream 28 lean in CO₂ and rich absorption liquid 29 that can optionally be provided as rich absorption liquid 19 for regeneration in the desorption unit.

Optionally, the plate assembly comprises a conduit for a fluid between said second plate and said third plate at a lateral end of said second plate, for heat exchange with at least contents of a first channel through said second plate, wherein said assembly comprises a separation extending from said second to said third plate, to separate between said conduit and said second channel. The fluid conduit advantageously can be used as integrated condenser, in particular when it is located at the lateral end where the outlet for desorbed gas is provided. Optionally, the gas desorption unit comprises such a conduit for fluid as integrated reboiler, in particular when it is located at the lateral end where the outlet for lean absorption liquid is provided.

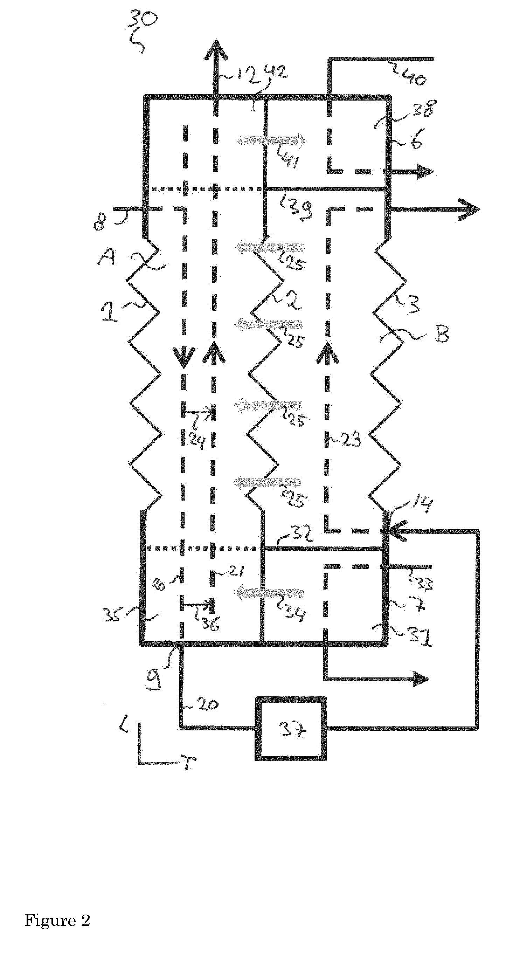

Figure 2 shows an example of an embodiment 30 of a gas desorption unit according to the invention, comprising plates 1, 2, and 3 and channels A and B. Unit 30 comprises at lower lateral end 7 in channel B a part 31 separated by separation 32 from the part of channel B where stream 23 flows. Part 31 is lower than inlet 14. Heating fluid 33 is passed through lateral end part 31 causing heat exchange 34 with lean absorption liquid 20 in lower lateral end part 35 of channel A and evaporation 36 thereof to form vapour 21. Hence, parts 31 and 35 form the optional integrated reboiler. The lean absorption liquid 20 is passed through pump 37 to inlet 14. In the same way, lateral end part 38 of channel B is separated by separation 39 from the part where heated absorption liquid 23 flows and is provided with an inlet and outlet for flow of cooling fluid 40 in counter-current flow with desorbed gas 12 in channel A and for heat exchange 41 with gas and/or vapour in lateral end part 42 of channel A. Lateral end part 42 is located above the inlet 8 for absorption liquid and hence comprises only desorbed gas 12 and/or remaining vapour. Heat exchange 41 causes condensation of desorbed gas 12 and/or vapour and accordingly parts 38 and 41 acts as integrated condensation. The other numbered features have the same meaning as in figure 1.

Preferably, the gas desorption unit comprises a reboiler connected to an outlet of a first channel for liquid and to an inlet of a second channel for liquid and to an inlet of a first channel for gas. The reboiler can for example be a separate reboiler. The reboiler typically comprises a conduit for lean absorption liquid in heat exchange with a channel for a heating fluid, and separate outlets for the formed vapour stream and heated absorption liquid stream. In figure 1, reboiler 13 is an external reboiler.

Preferably, the first channel comprises a corrugated part of the first plate comprising ridges crossing with ridges of the corrugated part of the second plate, preferably in combination with a second channel that comprises ridges of a corrugated part of the second plate aligned with valleys of a corrugated part of the third plate.

Ridges in corrugated parts of two adjacent plates have crossing ridges in case a line defined by a ridge of a first plate has a first point having the same position in the lateral and transversal direction as a second point on a line defined by a ridge of the adjacent plate and the lines at these points have a different direction. The ridges are convex inflection lines with respect to the channel formed between the two adjacent plates. The lines defined by the ridges have at least one crossing point in the plane parallel to the plates. Hence, the first and second point may have a different position in the normal direction (the plates are spaced apart) or not (the plates are in mechanical contact at the crossing points).

In the exemplary embodiment of figure 1, crossing points 18A and 18B have the same position in the lateral and transversal direction, lie at a ridge (the plate is bend inwards into channel A at both points) and the ridges of points 18A and 18B have an angled orientation to each other in the lateral-transversal plane. Ridges and valleys of two adjacent plates are aligned, in case the ridge of a first plate fits in a groove between two ridges of the adjacent second plate.

This provides as advantage the combination of structural rigidity and flow properties provided by the crossing ridges, while the aligned ridges provide a more flexible volume ratio (and hence flow area ratio) of the first and second channel. The volume of the channels can be independently controlled for example by using a spacer between the second plate and the third plate. Preferably, the ratio of the flow area of the second channels to the first channels is 1:5, more preferably 1:10, even more preferably 1:20 or even 1:50 or even smaller second channels relative to the first channels, in order to ensure a sufficient velocity in the of heated absorption liquid in the second channel.

Preferably, the first and second plate in the first channel are in mechanical contact at the points where said ridges cross. This advantageously provides mechanical strength. The preferred angled orientation of the ridges of the first and second may cause the contents of the first channel to flow around these contact points. This results in a highly tortuous path for the streams in the channel, contributing to efficient gas desorption and heat exchange. Typically, the ridges of the second and third plate are not in mechanical contact in the second channel, typically the ridges of the second and third plate in the second channel are at least spaced apart in the normal direction. The crossing points have a positive effect on the transversal liquid distribution, on the mass transfer efficiencies over the gas-liquid interface and on the heat transfer efficiency between channels.

Preferably, at least some of the corrugated parts of the plates comprise zig-zag corrugations. Zig-zag corrugations comprise non-curved parts, such that each ridge forms an inflection line between two adjacent non-curved plate parts that have an angled orientation in the normal direction to each other. The non-curved parts are at least non-curved in the normal plane, such that the cross-section of the parts in a plane defined by the lateral and normal direction consists of straight line segments.

Such corrugations provide for more efficient desorption and heat exchange. The corrugated plates may also comprise sinusoidal corrugations, and other types of smoothly curved corrugations. On the other hand, sinusoidal corrugations are typically curved in the plane normal to the plane defined by the plate.

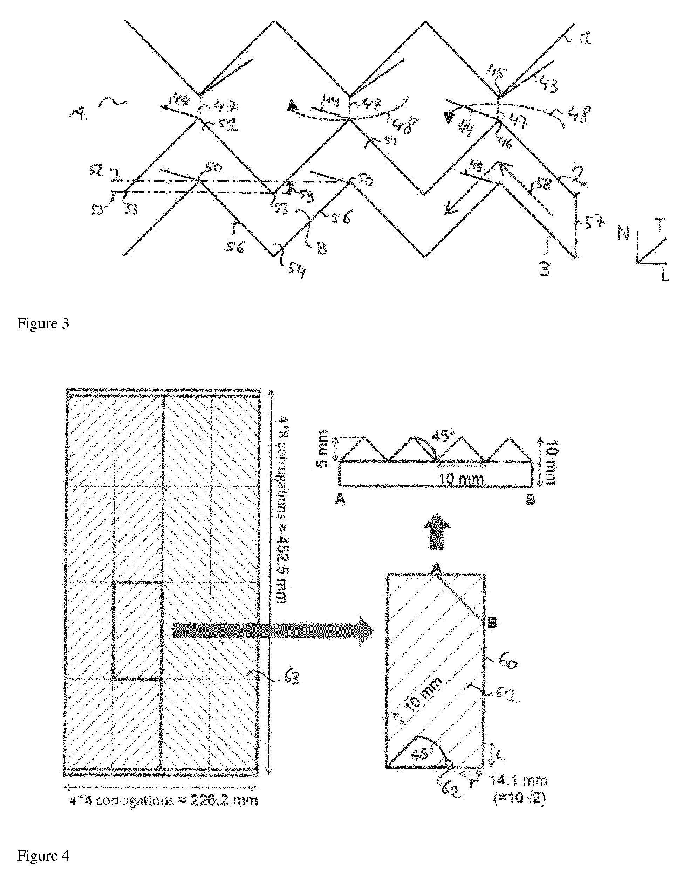

Figure 3 shows an exemplary embodiment of an assembly of plates of the invention. Plates 1, 2 and 3 define channels A and B between them and are parallel aligned in lateral direction L. Plate 1 comprises ridges 43 into channel A and plate 2 also comprises ridges 44 in channel A. At points 45 and 46, ridges 43 and 44 cross with each other and are in mechanical contact with each other, distance 47 is in fact not present. Therefore, the liquid and gas in channel A has a tortuous flow 48 around the crossing points. In contrast, ridge 49 of plate 3 is aligned with inflection line 44 of plate 2. Inflection line 44 of plate 2 forms a valley in channel B. Ridges 50 of plate 3 fit in grooves 51 of plate 2, *i.e.* the plane 52 defined by ridges 50 lies closer to valleys 44 than the plane 55 defined by ridges 53 of plate 2. Ridges 53 of plate 2 in the same way fit in groove 54 of plate 3. Plate 3 has zig-zag corrugations formed by non-curved elements 56, plates 1 and 2 in the same way have zig-zag corrugation. Liquid in channel B has a flow 58 according to the zig-zag pattern. Channel B comprises a spacer 57 between plates 2 and 3. Preferably, distance 59 between plane 52 and plane 55 is at least 10% of the distance between plate 2 and 3 (as set by spacer 57), more preferably at least 50%.

Preferably, each of said first, second and third plate comprises ridges and valleys comprising a part with an angle of 20° to 65° to an axis of said plate perpendicular to the direction of flow through the channel adjacent to the plate. This direction of flow is for example set by the inlets and outlets of the channels, typically the lateral direction. Hence, preferably each of the plate comprises ridges and valleys with an angle of 20° to 65° to the transversal direction, more preferably 40° to 60°, most preferably about 45°. Such angle provides for good convective flow properties. Such angle is often used for corrugated plates with a chevron pattern and for structured packing used as separation column internals.

Preferably, for ease of production, all plates in the assembly have the same corrugation patterns. Different types of plates can be provided with different orientations in the assembly, typically given by the inlets and outlets and fixed in the housing of the assembly.

Preferably, said corrugated parts of said first, second and third plate are provided with ridges and valleys in a chevron pattern, wherein said first and second plate have an opposite direction of the chevron pattern, and the second and third plate have the same direction of the chevron pattern.

Typically, the corrugations are provided in a chevron pattern in at least part of the plates, typically in the middle between two lateral ends of a plate. The chevron patterns comprise in each ridge a point of change of the angle of the ridge to the transversal axis of the plates. These points typically lie on longitudinal lines in the lateral direction, preferably such that the plate width is divided into equal parts, for example two, three, four, five or six parts, or even more parts. Typically in each such part the ridges and valleys are parallel. The chevron pattern can also be referred to as herringbone pattern. Preferred types of chevron pattern include the V-type and the W-type, dividing the width of the plates in two, respectively four parts. It is also possible to use a corrugated pattern having the same angle of the ridges and valleys to the transversal axis over the width of the plate, i.e. which does not have any angle change points.

Typically in a corrugated plate with a chevron pattern, at least some of the ridges, typically all, form lines in the plane of the plate extending over the width of an adjacent channel, wherein the ridges are formed by one V-segment or two or more adjoined V-segments, typically in a regular arrangement such that inflection points of the V-segments of adjacent ridges are defining lines in the lateral direction. Chevron type patterns are well known for corrugated plate-type heat exchangers.

Preferably, each of the first, second and third plate comprises ridges and valleys in a chevron pattern with a chevron angle of 20° to 65°, more preferably 40° to 60°, most preferably about 45°. The chevron angle is defined, as conventional, to the transversal direction.

Preferably, the corrugations have a width / height ratio of 1.5 to 5, more preferably 1.5 to 3. Herein, height refers to the distance in normal direction between a ridge and valley, and width refers to the distance between two adjacent valleys (with a ridge between them). Such ratio provides good flow properties in particular in the first channel.

Preferably, the plates have a vertical orientation, configured for counter-current flow of the gaseous phase and the liquid phase in the first channels by the difference in volumetric mass density of the liquid phase and the gaseous phase. This provides as advantages a good separation of the desorbed gas and the lean absorption liquid. For example, the gas desorption unit can be provided with a mount configured for a vertical orientation of the plates.

Preferably the gas desorption unit comprises at least one plate comprising, in part of the plate between a corrugated part of the plate and a first lateral end of the plate, an inlet for a liquid, preferably provided with a distributor to distribute liquid from the inlet over the width of the corrugated part, and a gas outlet between said inlet and said first lateral end of the plate. Possibly, the liquid inlet and gas outlet are combined. In this case, the liquid feed is distributed for example driven by gravity. A separate liquid inlet can also use forced flow to drive the distribution. Of course, the plate may also comprise multiple smaller inlets / outlets instead of or in combination with a distributor and collector. The distributor hence preferably distributes liquid at the inlet in the transversal direction. The distributor preferably has at least some parts with height less than the height of the corrugations, such as to allow transport of desorbed gas over it from the corrugated part to the outlet for desorbed gas. Hence, the distributor preferably comprises a bypass for desorbed gas in the channel over and/or around the distributor. Preferably, a distributor forms an integrated part of the plate and/or plate assembly. For example, the top part of the corrugations may also aid the liquid (re)distribution. More space can optionally be created by making the plates enclosing the second channel shorter than the plates enclosing the first channel, so having the liquid outlet of the second channel below the liquid inlet of the first channel. The distributor preferably comprises a restriction of flow of liquid in the lateral direction and preferably in the normal direction, such as to promote transport of the liquid in the transversal direction.

Preferably, the same plate comprises in a part of the plate between a corrugated part of the plate and a second lateral end of the plate opposite to said first lateral end, a gas inlet, preferably provided with a distributor, to distribute gas from the inlet over the width of the corrugated part, and between said gas inlet and said second lateral end of the plate, a liquid outlet. The liquid outlet is preferably provided with a collector for liquid to collect liquid in the transversal direction. The desorption unit preferably comprises a bypass for liquid around or over said distributor for gas.

Figure 4 shows an exemplary embodiment of a plate 60 as used in the invention. Valley 61 has an angle 62 of 45° with transversal direction T. As can be seen in figure 4, the fluid can travel within a channel over about a quarter of the length of the corrugated part. It is important that a fluid can not travel over the entire length of the corrugated part within one groove, because then the flow would not be tortuous. Accordingly, each grooves spans, or extends over, preferably at most 30% of the length of the corrugated part, more preferably at most 20 %, even more preferably at most 10 %.

Typically, the gas desorption unit comprises at least two assemblies of plates as described, that are adjacent in the normal direction (*i.e.* stacked). The gas desorption unit may in principle be configured for flow of the fluids through the assemblies consecutively (connected in series) or of parallel flow of split parts of one or more streams. Counter-current flows typically pass through consecutive assemblies in inverse order.

Preferably, the third plate of a first assembly acts as first plate of an second assembly that is adjacent in the normal direction Accordingly, the assembly of plates can be stacked. Typically, a housing is provided around the stack of assemblies of plates, rather than around each assembly separately

The invention will now be further illustrated by the following nonlimiting examples.

### Examples

### Example 1

Configurations were simulated in AspenPlus v7.3.2. The comparative desorber is simulated using a packing section divided in 20 segments with 10 m Mellapak 250.X structured packing at 1.9 bar. The desorber is simulated with a reboiler and condenser and a rich-lean heat exchanger and CO₂ compressor. As feed, 30% w/w aqueous solution mono ethanolamine (MEA) with a loading of 0.48 mol CO₂ per mol MEA was used at 50 °C and 5 bar. Reboiler temperature was 120 °C, condenser was at 40 °C. The calculated specific thermal duty of the reboiler was 3.8 MJ/kg CO₂, with the lean solvent having a load of 0.21 mol CO₂ per mol MEA and the temperature of the CO₂/H₂O stream entering the condenser of 106 °C. The heat transfer capacity is about 43 kW/°C per kg/s rich solvent.

The performance of the inventive process was initially calculated as a specific energy duty of 2.4 MJ/kg CO₂, assuming the same temperature difference between the CO₂ stream and the rich solvent as between the rich solvent and lean solvent. More detailed calculations taking fully into account the profile of the temperature difference between the rich and lean solvent and the available heat transfer capacity gave a specific energy duty of 3.3 MJ/kg CO₂. This smaller reduction of 15 % is caused by the outlet temperatures of the CO₂ and the lean liquid.

A sizing estimate based on a preferred maximum F-factor of 2 Pa^{1/2} in the desorber channels and an overall heat transfer coefficient of 500 W m⁻²K⁻¹ give a heat transfer area density of about 200 m² per m³ desorber channel volume. In order to ensure a minimum liquid velocity of 1 m/s, the lean solvent channel needs to have a volume that is about 50 times smaller than the desorber channels. This illustrates the importance of the independently controllable volume of the channels.

### Example 2

A bench-scale experiment was carried out to investigate the hydrodynamics and the separation efficiency of a first channel formed by two corrugated plates. A chevron angle of 45°, a corrugation height of 5 mm, zig-zag corrugations and a ratio of corrugation width/height of 2 was used. The specific surface area of the design was 560 m²/m³.

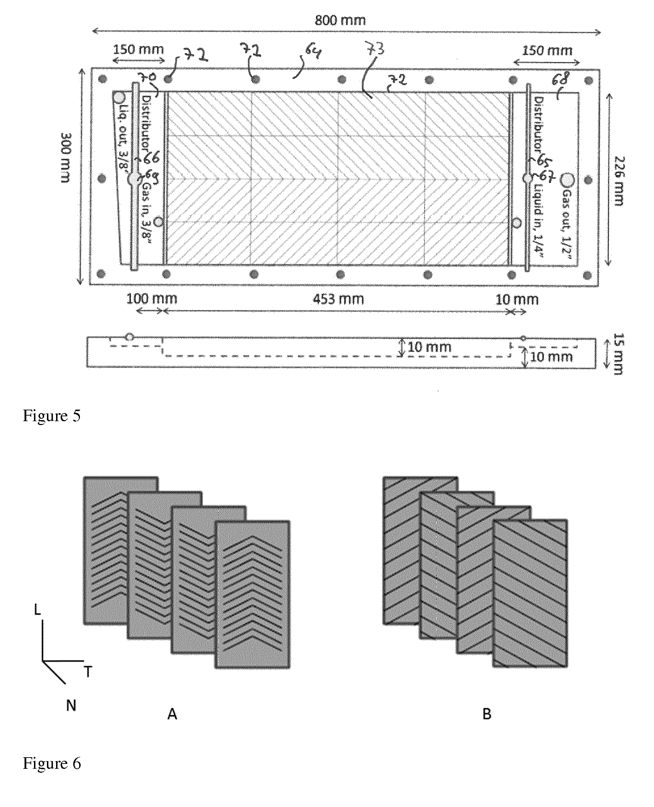

The design of the plates is shown in figure 5. The plate 64 has a corrugated part 73 with in the lateral direction 32 corrugations and 16 corrugations in the transversal direction. The total open cross-sectional area of the flow channel between two of the plates lied against each other is 11.3 cm². Based on a preferred minimum liquid load of 10 m³ m⁻² hr⁻¹ and a preferred maximum F-factor of 3, a minimum liquid flow of 11 l/hr and a maximum gas flow of 11 Nm³/hr were calculated. Distribution units 65, 66 are provided, each at a lateral end. Each distributor comprises a central inlet and 16 small holes positioned in the middle of one of the 16 flow channels provided at each lateral end of the corrugated parts, and has closed transversal ends. The liquid inlet 67 with distributor 65 is provided at the top lateral end 68 at 1 cm from the corrugated part 65, the vapour outlet 69 with distributor 66 is provided at the bottom lateral end 70 at 10 cm below the corrugation elements. The space between two plates can be made air-tight using bolts 71 and O-ring around the border of the plates (not shown) and O-rings strips 72 added directly next to each side of corrugated part 65 to prevent any fluid from by-passing the corrugated part.

Figure 6A shows schematically the preferred corrugation configuration A of the embodiment according to an example of the invention and figure 6B shows a less preferred configuration B. Configuration B represents the continuous linear configuration used in structured packing. In both figures, L indicates the lateral direction of flow of the streams over the plates.

In the experiments, a counter-current flow of a gaseous stream comprising air, N₂ and CO₂ was provided from the bottom and a liquid stream comprising water and MEA from the top.

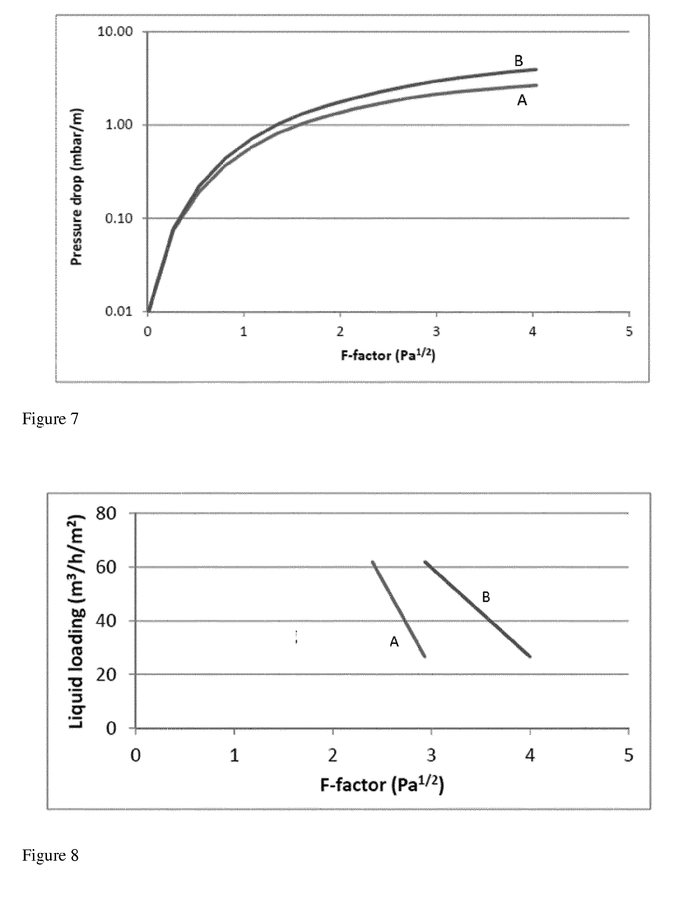

Figure 7 shows a comparison of the gas pressure drop without liquid flow between configuration A and B. For configuration A, the pressure drop is lower than for configuration B. Thus, for the same column size and gas flow, configuration A will require less energy for the auxiliary equipment; alternatively configuration A allows for a smaller column with the same energy for the auxiliary equipment.

Figure 8 shows the F-factors of the gas flow at the flooding point for various liquid loadings. For the same liquid flow, configuration A has a flooding point at a lower F-factor than configuration B.

Figure 9 shows the gas pressure drop as function of the F-factor for the configuration A, comparing a system with and without liquid flow.

Subsequently the CO₂ capture efficiency for configuration A and B was compared. CO₂ absorption is used instead of desorption for experimental simplicity. Feed was 30 % w/w MEA aqueous solution and air with 12 % v/v CO₂. Table 1 gives the used operating conditions.

**Table 1**

| Configuration | Gas flow (Nm³/h) | Liquid flow (L/h) | Temperature (°C) | | | |
|---|---|---|---|---|---|---|
| | | | Gas in | Gas out | Liquid in | Liquid out |
| A | 2/4/6 | 50 | 26.6 | 36.5 | 37.0 | 38.0 |
| A | 2/4/6 | 28 | 27.5 | 36.5 | 42.0 | 40.5 |
| B | 2/4/6 | 29 | 27.5 | 38.9 | 41.5 | 41.0 |

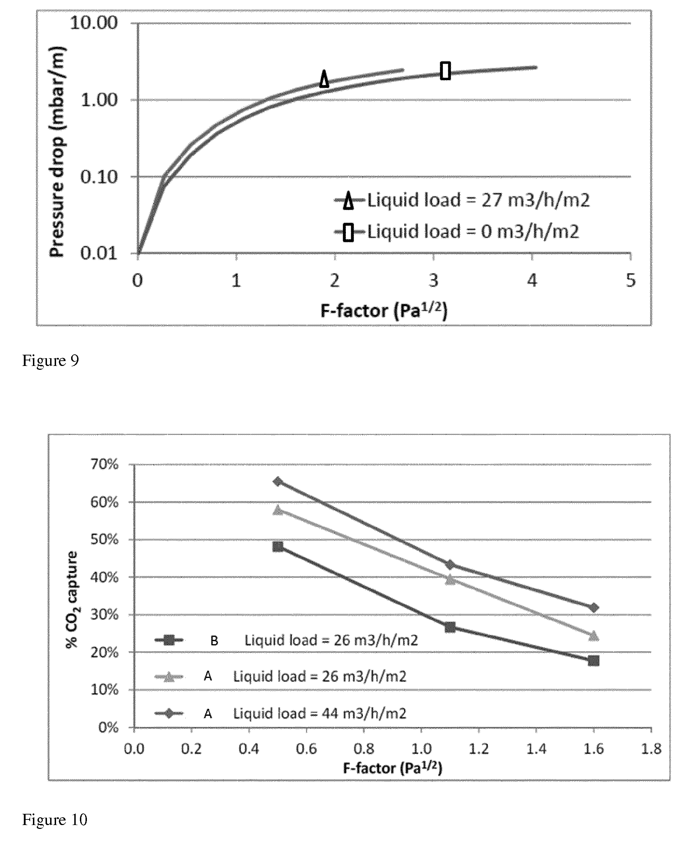

Figure 10 shows the CO₂ capture efficiency for the different experiments. Configuration A has a about 10% higher CO₂ capture rate than configuration B. Figure 10 also shows an increase of CO₂ capture rate with increased liquid flow rate.

In conclusion, a comparison between configuration A and B gives for configuration A a reboiler duty that is 15 % smaller (3.3 MJ/kg CO₂). The volume of desorber of A can be 15 % smaller, based on a pressure drop of 1.4 mbar/m for configuration B at an F-factor of 1.7 and a pressure drop of 1.0 mbar/m at an F-factor of 1.6 for configuration A. The volume of the heat exchanger can be reduced with 50 % because the two units are integrated, however as the desorber volume is typically 25 times larger than the heat exchange volume, this provides a reduction of 15 % of the integrated unit. The total contactor area can be 50 % smaller, based on the integration of the heat exchange area and the desorption area,

## Claims

1. Process for desorbing gas absorbed in an absorption liquid, the process comprising
(a) passing rich absorption liquid through a first channel of a gas desorption unit, thereby causing desorption of gas from the absorption liquid, to yield lean absorption liquid and desorbed gas, wherein said desorbed gas flows in counter-current flow with said absorption liquid in said first channel,
(b) evaporating part of said lean absorption liquid to yield vapour and heated absorption liquid,
(c) passing at least part of said vapour in said first channel in counter-current flow with said absorption liquid in said first channel, and
(d) passing heated absorption liquid through a second channel of said desorption unit in counter-current flow with said absorption liquid in said first channel, while said absorption liquid in said first and second channel exchange heat through a corrugated plate separating at least a part of said first and second channel.

2. Gas desorption process according to claim 1, wherein said gas comprise CO₂ and/or H₂S.

3. Gas desorption unit, preferably for a process according to claim 1 or 2, comprising an assembly of plates, said assembly comprising a first, second and third plate, each plate comprising a corrugated part comprising ridges and valleys, the corrugated parts of the first and second plate defining a part of a first channel between them, the corrugated parts of the second and third channel defining between them a part of a second channel adjacent to said part of said first channel,
wherein each of the first, second and third plate has opposed lateral ends, wherein the first channel comprises an inlet and an outlet for a gaseous stream at opposed lateral ends and an inlet and an outlet at opposed lateral ends for a liquid stream in counter-current flow with said gaseous stream, and wherein said second channel comprises an inlet and an outlet at opposed lateral ends for a liquid stream in counter-current flow with the liquid stream in the first channel.

4. Gas desorption unit according to claim 3, wherein the first channel comprises a corrugated part of the first plate comprising ridges crossing with ridges of the corrugated part of the second plate, and wherein the second channel comprises ridges of a corrugated part of the second plate comprising ridges aligned with valleys of a corrugated part of the third plate.

5. Gas desorption unit according to claim 3 or 4, wherein each of said plates comprises ridges and valleys with an angle of 20° to 65° to an axis of said plate perpendicular the direction of flow through the channel adjacent to the plate.

6. Gas desorption unit according to claim 4 or 5 wherein said corrugated part of said first, second and third plate are provided with ridges and valleys in a chevron pattern, wherein said first and second plate have an opposite direction of the chevron pattern, and the second and third plate have the same direction of the chevron pattern.

7. Gas desorption unit according to any one of claims 4-6, wherein the first and second plate in the first channel are in mechanical contact at the points where said ridges cross.

8. Gas desorption unit according to any one of claims 3-7, wherein at least some of the corrugated parts of the plates comprise zig-zag corrugations, sinusoidal corrugations, and/or other types of smoothly curved corrugations.

9. Gas desorption unit according to any one of claims 3-8, wherein the plates have a vertical orientation, configured for counter-current flow of the gaseous phase and the liquid phase in the first channels by the difference in volumetric mass density of the liquid phase and the gaseous phase.

10. Gas desorption unit according to any one of claims 3-9, comprising a plate comprising, in part of the plate between a corrugated part of the plate and a first lateral end of the plate, an inlet for a liquid, and a gas outlet between said inlet and said first lateral end of the plate, and, in a part of the plate between a corrugated part of the plate and a second lateral end of the plate opposite to said first lateral end, a gas inlet to distribute gas from the inlet over the width of the corrugated part, and a liquid outlet between said inlet and said second lateral end of the plate.

11. Gas desorption unit according to any one of claims 3-10, wherein the plate assembly comprises a conduit for a fluid between said second plate and said third plate at a lateral end of said second plate, for heat exchange with contents of a first channel through said second plate, wherein said assembly comprises a separation extending from said second to said third plate, to separate between said conduit and said second channel.

12. Gas desorption unit according to any one of claims 3-11, comprising an reboiler connected to an outlet of a first channel for liquid and to an inlet of a second channel for liquid and to an inlet of a first channel for gas.

13. Gas desorption unit comprising at least two assemblies of plates as defined in any one of claims 3-11, which are arranged adjacent to each other in the normal direction.

14. Gas desorption process according to claim 1 or 2, using a gas desorption unit according to any one of claims 3-13.

15. Gas separation process, comprising
- absorbing one or more gasses from a fluid stream into an absorption liquid, to yield rich absorption liquid and
- regenerating of at least part of said rich absorption liquid by a gas desorption process according to claim 14.
